# EUROPEAN PATENT APPLICATION

(11) **EP 4 770 054 A1**
(43) Date of publication of application: **01.07.2026**
(21) Application number: 24941982.1
(22) Date of filing: 25.11.2024
(51) Int. Cl.: H04L 67/12, H04L 41/0894, H04L 41/34, B60L 50/60, B60L 58/10, H01M 10/42

(54) **DATA MANAGEMENT DEVICE, AND VEHICLE COMPRISING SAME, AND METHOD**

(30) Priority: 29.05.2024 KR 20240070063
(71) Applicant: LG ENERGY SOLUTION, LTD., Seoul 07335 (KR)
(72) Inventor: YANG, Seong Yeol, Yuseong-gu Daejeon 34122 (KR); LEE, Ye Seul, Yuseong-gu, Daejeon 34122 (KR); CHOI, Bo Bi, Yuseong-gu, Daejeon 34122 (KR); KIM, Kyu Eun, Yuseong-gu, Daejeon 34122 (KR)
(74) Representative: Plasseraud IP
(86) International application number: PCT/KR2024/018775
(87) International publication number: WO 2025/249674

(57) **Abstract**

According to an embodiment disclosed herein, a data management device may include a master device, a main control unit, and an auxiliary control unit, wherein the master device may transmit a control signal including a network policy, a control command, or any combination thereof about a communication protocol to the auxiliary control unit, and the auxiliary control unit may be configured to generate a data frame based on the control signal, determine a transmission method and a transmission path, and then transmit the data frame to the main control unit corresponding to the data frame.

## Description

### Technical Field

### CROSS-REFERENCE TO RELATED APPLICATION

This application claims priority to and the benefit of Korean Patent Application No. 10-2024-0070063 filed in the Korean Intellectual Property Office on May 29, 2024, the entire contents of which are incorporated herein by reference.

### TECHNICAL FIELD

Embodiments disclosed herein relate to a data management device and method, and a vehicle including the data management device.

### Background Art

With the spread of electric vehicles driven through electricity, research and development on new vehicle architectures are being actively conducted. For example, the electric vehicle may be driven by a secondary battery, and here, the secondary battery is a rechargeable and dischargeable battery and includes both conventional Ni/Cd batteries and Ni/MH batteries and recent lithium ion batteries. Among the secondary batteries, the lithium-ion batteries have an advantage of having a much higher energy density than the conventional Ni/Cd batteries, the Ni/MH batteries, and the like. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

The battery cells, the battery modules, the battery packs, or the battery racks may be used in various devices. For example, the batteries may be used not only in mobile devices such as mobile phones, laptop computers, smart phones, and smart pads, but also in a field such as vehicles (electric vehicles (EV), hybrid electric vehicles (HEV), and plug-in HEVs (PHEV)) driven by electricity or a large power storage device (electric power storage system (ESS)).

States and operations of the batteries may be managed and controlled by a battery management system (BMS). The BMS may be included in one device together with the battery.

Meanwhile, as the vehicle industry changes, the concept of future mobility such as a software defined vehicle (SDV), a purpose-built vehicle (PBV), etc. is being gradually specified. For example, the SDV is a vehicle that controls and manages hardware with software. Software according to the SDV can define the driving performance of the vehicle and convenience functions, safety functions, emotional quality of the vehicle, and brand identity. By the architecture through the SDV, it is possible to reduce a development cost of the vehicle through the commonization of an electronic control unit (ECU) and software internalization. In addition, an autonomous driving technology can be advanced through high-performance computers and networks based on an electronic architecture.

### Disclosure

### Technical Problem

During a process of controlling autonomous driving for a vehicle, it is increasingly important to manage and store data according to autonomous driving. In vehicles including a structure of a software defined vehicle (SDV), a specific control unit (e.g., an auxiliary control unit or a zonal controller) serves as a gateway or a network switch and performs form conversion based on a signal to data frame or performs a handling logic based on various data management methods under critical environments such as detecting occurrence of accidents.

Embodiments disclosed herein are directed to providing a data management device and method, and a vehicle including the data management device, which are capable of efficiently managing data as data (or a data frame) is generated and managed according to its type, destination, priority, purpose, source, or the like through control of a master device and a transmission method to other devices is determined in a vehicle including a structure of the SDV.

Objects of embodiments disclosed herein are not limited to the above-described objects, and other objects that are not mentioned will be able to be clearly understood by those skilled in the art from the following descriptions.

### Technical Solution

According to an embodiment disclosed herein, a data management device may include a master device, a main control unit, and an auxiliary control unit.

According to an embodiment, the master device may be configured to transmit a control signal including a network policy, a control command, or any combination thereof about a communication protocol to the auxiliary control unit.

According to an embodiment, the auxiliary control unit may be configured to generate a data frame based on the control signal, determine a transmission method and a transmission path, and then transmit the data frame to the main control unit corresponding to the data frame.

According to an embodiment, the control signal may include information about at least one of a type of data frame, a priority according to the type, a destination, a source, the transmission method, the transmission path, or any combination thereof.

According to an embodiment, the master device may be a first control device included in the main control unit or the auxiliary control unit, and may correspond to a separate second control device distinguished from the main control unit and the auxiliary control unit.

According to an embodiment, the auxiliary control unit may be configured to identify a specified high performance computer (HPC) corresponding to the data frame among a plurality of HPCs included in the main control unit based on the control signal, collect the data frame for a control cycle of the specified HPC, and transmit the collected data frame to the specified HPC based on the control cycle.

According to an embodiment, the master device may be configured to update at least one of the network policy, the control command, or any combination thereof based on at least one of a network state between the main control unit and the auxiliary control, an administrator command received from the outside, or any combination thereof.

According to an embodiment, the data management device may further include an end device.

According to an embodiment, the master device may be configured transmit the control signal to the end device.

According to an embodiment, the end device may be configured to generate a battery pack data frame for controlling a battery pack based on the control signal and control the battery pack based on the battery pack data frame.

According to an embodiment, the end device may be configured to identify a specified zone controller corresponding to the battery pack data frame among a plurality of zone controllers included in the auxiliary control unit based on the control signal, collect the battery pack data frame for a control cycle of the specified zone controller, and transmit the collected battery pack data frame to the specified zone controller based on the control cycle.

According to an embodiment, the auxiliary control unit may be configured to adjust an operation weight of each of a plurality of functions including at least one of end device control, network communication, protection, monitoring, or any combination thereof based on the control signal.

According to an embodiment, the master device may be configured to determine at least one of the network policy, the control command, or any combination thereof based on an operation state of a host vehicle.

According to an embodiment disclosed herein, there may be provided a vehicle including any one of the above-described data management devices.

According to an embodiment disclosed herein, a data management method may include transmitting, by a master device, a control signal including a network policy, a control command, or any combination thereof about a communication protocol to an auxiliary control unit, and generating, by the auxiliary control unit, a data frame based on the control signal, determining a transmission method and a transmission path, and then transmitting the data frame to the main control unit corresponding to the data frame.

According to an embodiment, the master device may be a first control device included in the main control unit or the auxiliary control unit, and may correspond to a separate second control device distinguished from the main control unit and the auxiliary control unit.

According to an embodiment, the data management method may further include identifying, by the auxiliary control unit, a specified high performance computer (HPC) corresponding to the data frame among a plurality of HPCs included in the main control unit based on the control signal, collecting, by the auxiliary control unit, the data frame for a control cycle of the specified HPC, and transmitting, by the auxiliary control unit, the collected data frame to the specified HPC based on the control cycle.

According to an embodiment, the data management method may further include updating, by the master device, at least one of the network policy, the control command, or any combination thereof based on at least one of a network state between the main control unit and the auxiliary control, an administrator command received from the outside, or any combination thereof.

According to an embodiment, the data management method may further include transmitting, by the master device, the control signal to an end device, and generating, by the end device, a battery pack data frame for controlling a battery pack based on the control signal and controlling the battery pack based on the battery pack data frame.

According to an embodiment, the data management method may further include identifying, by the end device, a specified zone controller corresponding to the battery pack data frame among a plurality of zone controllers included in the auxiliary control unit based on the control signal, collecting, by the end device, the battery pack data frame for a control cycle of the specified zone controller, and transmitting, by the end device, the collected battery pack data frame to the specified zone controller based on the control cycle.

According to an embodiment, the data management method may further include adjusting, by the auxiliary control unit, an operation weight of each of a plurality of functions including at least one of end device control, network communication, protection, monitoring, or any combination thereof based on the control signal.

According to an embodiment, the data management method may further include determining, by the master device, at least one of the network policy, the control command, or any combination thereof based on an operation state of a host vehicle.

### Advantageous Effects

According to the data management device and method according to the embodiments disclosed herein, as data required for operating a vehicle such as autonomous driving, etc. increases under a structure of a software defined vehicle (SDV), there can be provided the data management method for a vehicle, which can lower the load of the network through the method of efficiently transmitting data to other devices and reduce the delay during the communication process through uniform data management based on policy.

In addition, various effects that may be directly or indirectly identified through the present document can be provided.

### Description of Drawings

FIG. 1 is a conceptual diagram illustrating a structure of a vehicle including a data management device according to one embodiment disclosed herein.
FIG. 2 is a conceptual diagram illustrating the structure of the vehicle including the data management device according to one embodiment disclosed herein.
FIG. 3 is a block diagram illustrating a configuration of the data management device according to one embodiment disclosed herein.
FIG. 4 is a block diagram illustrating a configuration of an auxiliary control unit according to one embodiment disclosed herein.
FIG. 5 is a conceptual diagram illustrating the configuration of the data management device according to one embodiment disclosed herein.
FIG. 6 is a conceptual diagram illustrating the configuration of the data management device according to one embodiment disclosed herein.
FIG. 7 is a conceptual diagram illustrating a method of transmitting data by the data management device according to one embodiment disclosed herein.
FIG. 8 is a flowchart of the data management method according to one embodiment disclosed herein.
FIG. 9 is a flowchart of the data management method according to one embodiment disclosed herein.
FIG. 10 is a flowchart of the data management method according to one embodiment disclosed herein.
FIG. 11 is a block diagram illustrating a hardware configuration of a computing system for performing an operation method of the data management device according to one embodiment disclosed herein.

### Mode for Invention

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

The singular form of a noun corresponding to an item in this document may include one item or a plurality of items unless the relevant context clearly dictates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," or "second" may simply be used to distinguish the corresponding component from another and do not limit the corresponding components in another aspect (e.g., importance or order). When a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., in a wired manner), in a wireless manner, or through a third component.

Each (e.g., a module or a program) of components described herein may include a single object or a plurality of objects. According to various embodiments, one or more among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

As used herein, the term "module," or "part" may include a unit implemented in hardware, software, or firmware and may be used interchangeably with terms such as logic, logic block, component, or circuit. The module may be an integrated part or a minimum unit of the parts or a portion thereof that performs one or more functions. For example, according to one embodiment, the module may be implemented in the form of an application-specific integrated circuit (ASIC).

Various embodiments of this document may be implemented as software (e.g., a program or application) including one or more commands stored in a storage medium (e.g., a memory) that may be read by a machine. For example, a processor of the device may fetch at least one command among one or more commands stored from a storage medium and execute the commands. This allows the device to be operated to perform at least one function according to the at least one fetched command. The one or more commands may include code generated by a compiler or code that may be executed by an interpreter. A device-readable storage medium may be provided in the form of a non-transitory storage medium. Here, "non-transitory storage medium" is a tangible device and only means not including a signal (e.g., electromagnetic waves), and this term does not distinguish between cases in which data is stored semi-permanently and temporarily in the storage medium.

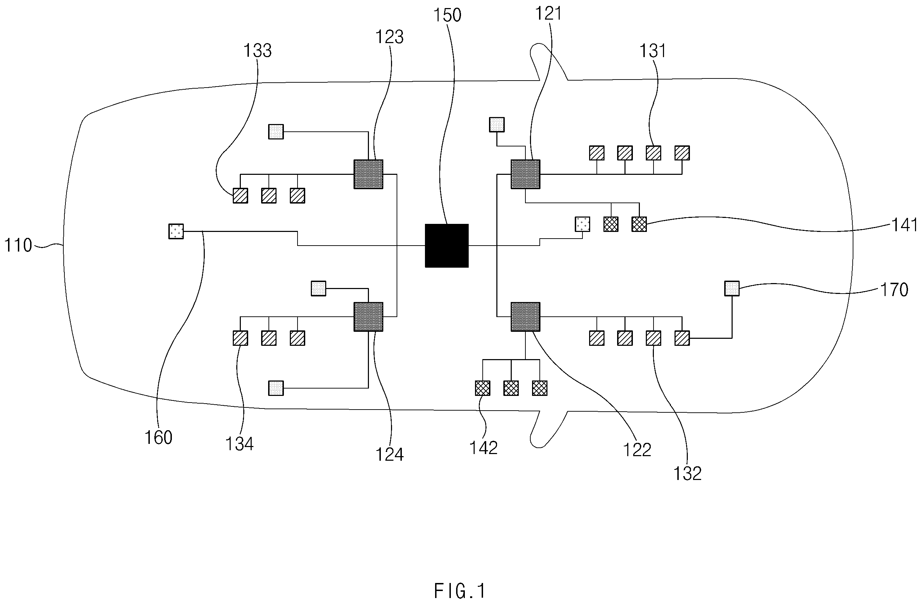

FIG. 1 is a conceptual diagram illustrating a structure of a vehicle including a data management device according to one embodiment disclosed herein.

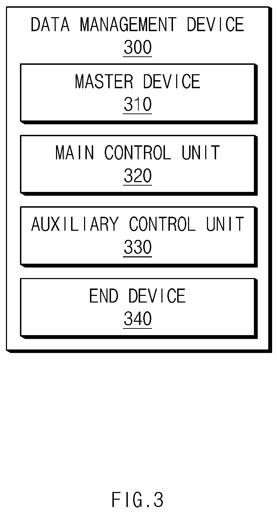

According to one embodiment, a data management device (e.g., a data management device 300 of FIG. 3) may include at least some of components included in a vehicle 110 according to a software defined vehicle (SDV) architecture. The data management device may manage, for example, power and/or data transmitted and received between the components of the vehicle 110.

For example, the vehicle 110 may include at least one of a first zone controller 121, a second zone controller 122, a third zone controller 123, a fourth zone controller 124, a first termination device 131, a second termination device 132, a third termination device 133, a fourth termination device 134, a first actuator 141, a second actuator 142, a high performance computer (HPC) 150, a transmission/reception path 160, an additional element 170, or a combination thereof. The data management device for data management of the vehicle 110 may include at least some of the components included in the vehicle 110.

For example, components according to the SDV architecture may include a hierarchical structure in the order of the HPC 150, the zone controller, and the termination device.

For example, the HPC 150 may be connected to the first zone controller 121, the second zone controller 122, the third zone controller 123, and the fourth zone controller 124 and may transmit and receive various types of data with each zone controller.

For example, the first zone controller 121, the second zone controller 122, the third zone controller 123, and the fourth zone controller 124 may control the first termination device 131, the second termination device 132, the third termination device 133, and the fourth termination device 134, respectively. The termination device may include at least one of, for example, a sensor for controlling the vehicle 110, a battery (or a battery management system (BMS)) for driving the vehicle 110, or a combination thereof. For example, when one of the second termination devices 132 is the BMS, an additional element 170 may be defined as a battery pack.

For example, the first zone controller 121 and the second zone controller 122 may control the first actuator 141 and the second actuator 142, respectively. The actuator may include, for example, at least one driving device for driving the vehicle 110.

For example, the above-described components may perform communication based on a specified path (e.g., a transmission/reception path 160) through an automotive Ethernet.

The data management device according to one embodiment of the present document may control and manage the communication process of power and/or data transmitted or received between the above-described components.

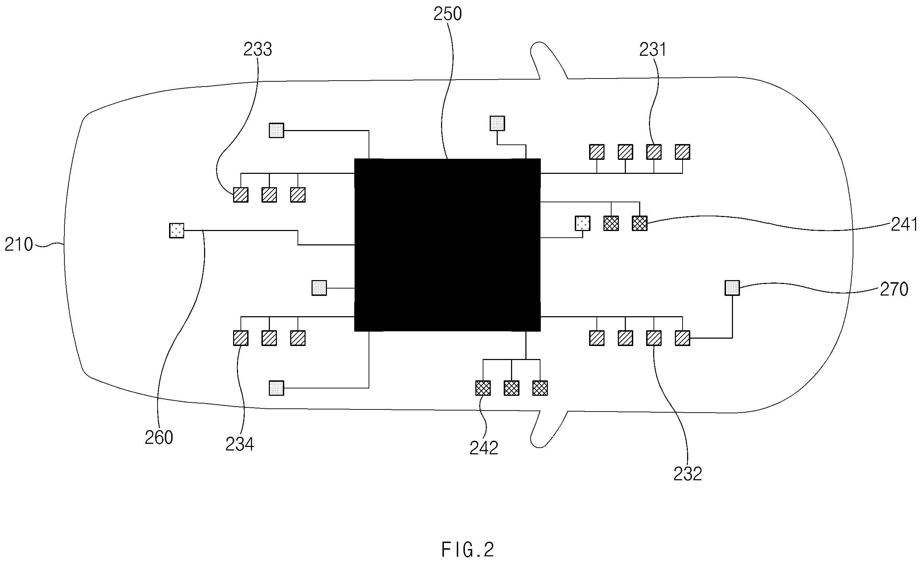

FIG. 2 is a conceptual diagram illustrating the structure of the vehicle including the data management device according to one embodiment disclosed herein.

In FIG. 2, the description of components defined as the same names as in FIG. 1 may be replaced with the above-described description of FIG. 1.

For example, a host vehicle 210 may include at least one of a first end device 231, a second end device 232, a third end device 233, a fourth end device 234, a first actuator 241, a second actuator 242, a high performance computer (HPC) 250, a transmission/reception path 260, an additional element 270, or any combination thereof. The data management device for data management of the host vehicle 210 may include at least some of the components included in the host vehicle 210.

For example, the host vehicle 210 according to FIG. 2 does not include a zone controller when compared to FIG. 1. That is, even when the SDV architecture is adopted, the host vehicle 210 may be implemented in a structure in which the HPC 250 directly controls at least one end device as in FIG. 2.

FIG. 3 is a block diagram illustrating a configuration of the data management device according to one embodiment disclosed herein.

Referring to FIG. 3, the data management device 300 may include a master device 310, a main control unit 320, an auxiliary control unit 330, and/or an end device 340.

According to one embodiment, the data management device 300 may perform power and/or data management between components for controlling the host vehicle. For example, the host vehicle may be operated by components according to the SDV architecture. For example, the SDV may include a hierarchy structure in the order of an HPC, a zone, an end device, and a sensor/actuator. In this case, a vehicle according to the SDV may be divided into a plurality of zones, and each zone may include a control unit (e.g., a zone controller) for controlling components of a lower layer included in the zone. The control unit of the zone may be electrically connected to the HPC to transmit and receive various signals. The above-described contents are illustrative, and embodiments of the present disclosure are not limited thereto. For example, according to an SDV architecture of another embodiment (e.g., an SDV architecture embodiment according to FIG. 2), the HPC and the end device may be operatively connected, and the zone may be omitted. For example, the auxiliary control unit 330 may include a zone controller corresponding to each of the plurality zones (e.g., a front zone, a rear zone, a left zone, and a right zone) in the host vehicle.

The data management device 300 may transmit and receive at least one of power, data (e.g., a wake-up packet), a control signal, or any combination thereof for components included in an electronic device. In one embodiment, the electronic device 100 may be a mobile device (e.g., a mobile phone, a laptop computers, a smart phone, or a smart pad), an electric vehicle (e.g., an electric vehicle (EV), a hybrid EV (HEV), a plug-in HEV (PHEV), or a fuel cell EV (FCEV)), an energy storage system (ESS), or a battery swapping system (BSS). In one embodiment, the electronic device may include vehicles (e.g., electric vehicles, hybrid electric vehicles, and the like) and the like and include a mobility driven based on electric energy. That is, for example, the data management device 300 may be included in the vehicle and configured to manage data for the operation of the vehicle (e.g., the operation for autonomous driving control).

The following operation of the data management device 300 may be performed by a battery management system (BMS) in the vehicle and a battery BMS provided in a battery pack and may also be performed in various devices such as a server, a cloud, a charger, a charger/discharger, and the like.

According to one embodiment, the master device 310 may be electrically connected to the main control unit 320, the auxiliary control unit 330, and/or the end device 340 to transmit/receive and manage various data.

For example, the master device 310 may correspond to a first control device included in the main control unit 320 or the auxiliary control unit 330, or a separate second control device that is distinguished from the main control unit 320 and the auxiliary control unit 330.

For example, the master device 310 may correspond to one of a plurality of HPCs included in the main control unit 320 and a plurality of zone controllers included in the auxiliary control unit 330.

For example, the master device 310 may be a separate control device (e.g., an HPC or a controller) that is physically and logically distinguished from the main control unit 320 and the auxiliary control unit 330.

For example, although one master device 310 is illustrated, the data management device 300 may further include one or more other master devices.

For example, the master device 310 may generate and update network policies and control commands about communication protocols such as data generation, transmission/reception, processing, deletion, and storage in the data management device 300.

For example, the master device 310 may transmit control signals including at least one of a network policy, a control command, or any combination thereof about the communication protocols to the main control unit 320 and/or the auxiliary control unit 330. The control signal may include information about at least one of, for example, the type of data frame, a priority according to the type, a destination, a source, a transmission method, a transmission path, or any combination thereof. For example, the main control unit 320 and/or the auxiliary control unit 330 may generate data based on the control signals received from the master device 310 and transmit the data to another device.

For example, the master device 310 may update at least one of the network policy, the control command, or any combination thereof based on at least one of a network state between the main control unit 320 and the auxiliary control unit 330, an administrator command received from the outside, or any combination thereof. The master device 310 may re-transmit the control signals including the updated content to the auxiliary control unit 330 based on a specific cycle.

According to one embodiment, the master device 310 may determine a network policy and/or a control command based on an operation state of the host vehicle including the data management device 300 and transmit the determined network policy and control command to another device.

For example, when the host vehicle is operating in a normal state (e.g., a stopped state, a driving state, or the like), the master device 310 may transmit a predefined network policy and/or control command to another device.

For example, the master device 310 may transmit a predefined network policy including a method (or a protocol) for transmitting battery information (e.g., cell data) to another device and the end device 340 related to a battery. When the vehicle is in a normal state, the end device 340 may continuously renew and update the battery information based on the predefined network policy. When the end device 340 fails to transmit first battery information to another device at a first time point, the end device 340 does not re-transmit the first battery information and may transmit second battery information at a second time point, which is the next transmission cycle. The first battery information may be battery information renewed at the first time point, and the second battery information may be battery information renewed at the second time point. That is, when the vehicle is in a normal state, the master device 310 may determine a network policy so that, when the end device 340 fails to transmit battery information to another device at a specific time point while updating battery information in real time, the end device 340 does not re-transmit the information and transmits the updated real-time battery information at the transmission time point of the next transmission cycle. Accordingly, in the normal state of the vehicle, the vehicle may implement an efficient communication protocol by transmitting only information that is updated in real time at the next transmission time without performing the unnecessary re-transmission operation after the data transmission failure.

For example, when the vehicle is operating in a diagnosis state (or, a check state), the master device 310 may transmit a network policy and/or control command for transmitting and receiving data to the end device 340 about a component being diagnosed.

For example, when the vehicle is operating in a diagnosis state about a battery, the master device 310 may transmit a network policy and/or control command for transmitting and receiving battery diagnosis-related data (e.g., cell data) to a specific end device (e.g., a BMS) about the battery among the end devices 340.

For example, the specific end device may store the battery diagnosis-related data permanently or for a longer time than other data based on receiving the network policy and/or the control command. In this case, unlike the normal state of the vehicle, the end device may store all diagnosis data generated during the diagnosis process and transmit all stored diagnosis data to another device. For example, the specific end device may identify a specific HPC about the diagnosis state among the plurality of HPCs included in the main control unit 320 and directly transmit the battery diagnosis-related data to a specific zone controller corresponding to the specific HPC among the plurality of zone controllers included in the auxiliary control unit 330. Such a transmission process may be a logical transmission process including routing. For example, the specific end device may continuously transmit the battery diagnosis-related data based on a specified cycle without deleting the battery diagnosis-related data until receiving an ACK signal indicating that it has received the battery diagnosis-related data from the specific HPC and/or the specific zone controller.

For example, when the host vehicle fails or an accident occurs in the host vehicle, the master device 310 may generate a network policy and/or control command that instruct an increase in priority of the transmission/reception operations of data generated from the device (e.g., the auxiliary control unit 330 and/or the end device 340) related to the failure and/or the accident and transmit the network policy and/or the control command to another device.

For example, when the failure and/or the accident is detected in a specific zone among a plurality of zones of the host vehicle, the master device 310 may generate a network policy and/or control command that instruct an increase in priority of transmission/reception operations of data generated from the specific zone (or data generated from the zone controller and/or the end device 340 that correspond to the specific zone) and transmit the network policy and/or the control command to one or more devices included in the data management device 300.

For example, when an accident or warning situation occurs in the host vehicle, the master device 310 may specify data corresponding to the corresponding situation in a specified form (e.g., a permanent form or an event form) and transmit the specified data to another device. For example, when a first zone controller included in the auxiliary control unit 330 and configured to communicate with a first HPC receives the above-described data in the specified form, the first zone controller may transmit the above-described data in the specified form to at least one other HPC excluding the first HPC. At least one HPC may be HPCs included in the other zones excluding the first zone including the first zone controller among the plurality of zones of the host vehicle.

For example, the zone controller and/or the end device 340 that correspond to (or included in) the specific zone may increase a transmission speed, quality, stability, and the like of the data based on receiving the network policy and/or the control command to control the corresponding data to be quickly stably transmitted to other devices that process a failure and/or an accident.

According to one embodiment, the main control unit 320 may include a plurality of HPCs.

For example, the main control unit 320 may perform operations such as generation, transmission/reception, processing, deletion, and storage of data based on control signals received from the master device 310.

For example, the main control unit 320 may receive a data frame from the auxiliary control unit 330.

According to one embodiment, the auxiliary control unit 330 may perform operations such as data generation, transmission/reception, processing, deletion, and storage based on the control signals received from the master device 310 and adjust an operation weight for each of a plurality of functions that the auxiliary control unit 330 may perform.

For example, the auxiliary control unit 330 may generate a data frame based on the control signals.

For example, the auxiliary control unit 330 may determine a transmission method and transmission path of the data frame based on the control signals and then transmit the data frame to the main control unit 320 corresponding to the data frame.

For example, the auxiliary control unit 330 may identify a specified HPC (or a target device) corresponding to the data frame based on the control signal among the plurality of HPCs included in the main control unit 320.

For example, the auxiliary control unit 330 may identify a control cycle of the specified HPC and then continuously collect data frames during the identified control cycle.

For example, the auxiliary control unit 330 may transmit the collected data frames to the specified HPC based on the control cycle. That is, the auxiliary control unit 330 may collect the data frames during the control cycle and transmit the collected data frames (or jumbo frames) to the specified HPC.

For example, the specified HPC (or the target device) may divide the data frames (or one or more frames) received from the auxiliary control unit 330 on the basis of a service and process the services. For example, the target device may divide data included in at least one frame into a first service related to a battery pack, a second service related to a sensor, a third service related to multimedia, and the like and process the services. In this case, the target device may correspond to one of the plurality of HPCs included in the main control unit 320.

For example, the auxiliary control unit 330 may adjust an operation weight of each of a plurality of functions including at least one of end device control, network communication, protection, monitoring, or any combination thereof based on control signals. By adjusting the operation weight, the auxiliary control unit 330 may change a priority, processing time, load, processing amount, and the like of each of the plurality of functions.

According to one embodiment, the end device 340 may be electrically connected to the auxiliary control unit 330, the main control unit 320, and/or the master device 310.

For example, the end device 340 may include a plurality of control devices for controlling components (e.g., a sensor, a camera, a battery pack, an actuator, and the like) of the host vehicle.

For example, the end device 340 may be a BMS including a battery pack, but this is illustrative and the embodiments of this document are not limited thereto.

For example, the end device 340 may receive control signals from the master device 310. For example, the end device 340 may generate a battery pack data frame for controlling the battery pack based on the control signals and control the battery pack based on the battery pack data frame.

For example, the end device 340 may perform an operation time, operation intensity, temperature and/or pressure control, TP control, and the like of the battery pack based on the battery pack data frame.

For example, the end device 340 may transmit information about a control process and control result of the battery pack based on the battery pack data frame, the battery pack, and the like to the auxiliary control unit 330, the main control unit 320, and/or the master device 310.

For example, the end device 340 may identify a specified zone controller corresponding to the battery pack data frame among the plurality of zone controllers included in the auxiliary control unit 330 based on the control signals. For example, the specified zone controller may be a zone controller installed in a zone including a battery pack.

For example, the end device 340 may collect battery pack data frames during the control cycle of the specified zone controller and transmit the collected battery pack data frames (or battery pack jumbo frames) to the specified zone controller based on the control cycle.

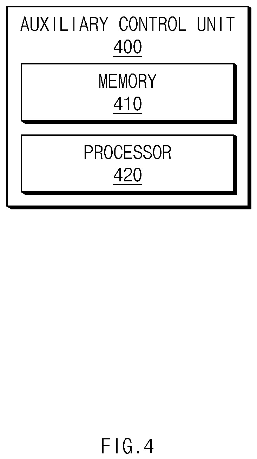

FIG. 4 is a block diagram illustrating a configuration of an auxiliary control unit according to one embodiment disclosed herein.

According to one embodiment, the data management device (e.g., the data management device 300 of FIG. 3) may include an auxiliary control unit 400 (e.g., the auxiliary control unit 330 of FIG. 3).

According to one embodiment, the auxiliary control unit 400 may include a memory 410 and a processor 420. A configuration of the auxiliary control unit 400 illustrated in FIG. 4 is illustrative, and the embodiments of the present invention are not limited thereto. For example, the auxiliary control unit 400 may further include components (e.g., at least one of a communication unit, a display unit, a notification unit, a plurality of zone controllers, or any combination thereof) not illustrated in FIG. 4.

According to one embodiment, the memory 410 may store commands or data. For example, the memory 410 may store one or more instructions that, when executed by the processor 420, allow the auxiliary control unit 400 to perform various operations.

For example, the memory 410 may be implemented as a single chipset with the processor 420. The processor 420 may include at least one of a communication processor or a modem.

For example, the memory 410 may store various pieces of information associated with the data management device (or the battery pack). For example, the memory 410 may store information about the operation history of the processor 420. For example, the memory 410 may store information associated with states and/or operations of the components of the auxiliary control unit 400 (or the battery pack).

For example, the memory 410 may include different types of a plurality of storage devices. For example, the memory 410 may include at least one of a random-access memory (RAM), an embedded multi-media card (eMMC), or any combination thereof.

According to one embodiment, the processor 420 may be operatively connected to the memory 410. For example, the processor 420 may control the operation of the memory 410.

For example, the processor 420 may be implemented as one of a micro controller unit (MCU), a domain controller unit (DCU), or a zone control unit (ZCU).

For example, the processor 420 may receive control signals including at least one of a network policy, a control command, or any combination thereof about a communication protocol from a master device (e.g., the master device 310 of FIG. 3).

For example, the control signal may include information about at least one of the type of data frame to be generated and managed by the auxiliary control unit 400, a priority according to the type, a destination, a source, a transmission method, a transmission path, or any combination thereof.

For example, the processor 420 may generate data frames based on the control signals, determine a transmission method and a transmission path, and then transmit the data frames to the main control unit (e.g., the main control unit 320 of FIG. 3) corresponding to the data frames.

For example, the processor 420 may identify a specified HPC corresponding to the data frame among the plurality of HPCs included in the main control unit based on the control signals, collect the data frames during a control cycle of the specified HPC, and transmit the collected data frames to the specified HPC based on the control cycle.

For example, the processor 420 may adjust an operation weight of each of a plurality of functions including at least one of end device control, network communication, protection, monitoring, or any combination thereof based on control signals.

For example, the processor 420 may receive various data from the main control unit and/or the end device (e.g., the end device 340 of FIG. 3). For example, the processor 420 may group the received data based on a specified criterion to generate at least one frame (or a jumbo frame) and transmit the generated at least one frame to a target device identified based on the specified criterion.

For example, the target device may be at least one of a plurality of HPCs included in the main control unit, a plurality of zone controllers included in the auxiliary control unit, a master device, or any combination thereof.

For example, the processor 420 may collect data received for a first time and group the data based on at least one of the type of data, a destination, a domain, or any combination thereof.

For example, the processor 420 may group the data and generate a target jumbo frame to be transmitted to the target device. For example, the target jumbo frame may include the result of collecting data generated about the target device for the first time.

For example, the processor 420 may identify the control cycle of the target device, and when the first time reaches the control cycle, the processor 420 may transmit the target jumbo frame to the target device. Since the target device receives the collected target jumbo frames at once per control cycle, a network load of the data management device can be reduced, and data may be transmitted and received efficiently per control cycle without missing data.

For example, the auxiliary control unit 400 may include a plurality of zone controllers. Each of the plurality of zone controllers may include the processor 420.

For example, the first zone controller may receive data from at least one of the main control unit, the end device, or any combination thereof. For example, the first zone controller may transmit data to the second zone controller corresponding to the characteristics of the received data.

For example, the first zone controller may receive data from at least one of the main control unit, the end device, or any combination thereof based on a first communication speed (e.g., 1 Gbps).

For example, the first zone controller may transmit data to the second zone controller based on a second communication speed (e.g., 10 Gbps). The second communication speed may be higher than the first communication speed.

That is, the auxiliary control unit 400 may operate based on a relatively higher communication speed when performing internal communication than when performing external communication.

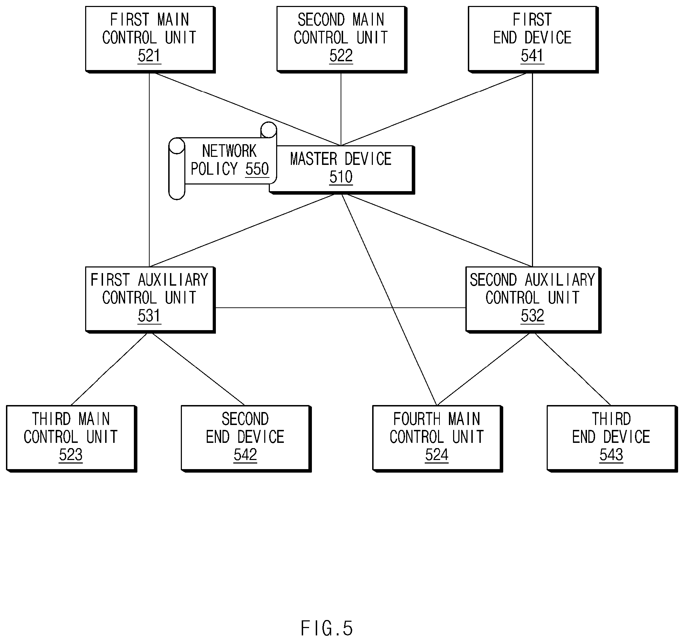

FIG. 5 is a conceptual diagram illustrating the configuration of the data management device according to one embodiment disclosed herein.

According to one embodiment, the data management device (e.g., the data management device 300 of FIG. 3) may include a master device 510 (e.g., the master device 310 of FIG. 3), a plurality of main control units 521, 522, 523, and 524, a plurality of auxiliary control units 531 and 532, and a plurality of end devices 541, 542, and 543.

According to FIG. 5, the master device 510 may control operations of data generation, transmission/reception, processing, removal, management, and the like of other components through a network policy 550. For example, the network policy 550 may be updated and then transmitted based on a specified cycle. For example, the network policy 550 may be updated based on at least one of a network state between components, an administrator command received from the outside, or any combination thereof. For example, the network policy 550 may include information about at least one of the type of data frame, a priority according to the type, a destination, a source, a transmission method, a transmission path, or any combination thereof.

For example, the master device 510 may generate a plurality of network policies. The master device 510 may generate a first policy and a second policy and selectively transmit the generated policy based on the characteristics (e.g., a control target, performance, storage capacity, and the like) of each of the components of the data management device. For example, the master device 510 may transmit only one policy to one component and transmit a plurality of policies together.

For example, a first main control unit 521, a second main control unit 522, a first end device 541, a first auxiliary control unit 531, and a second auxiliary control unit 532 may receive the network policy 550 from the master device 510 based on a specified cycle. Other components not described above may manage data without being based on the network policy 550, but this is illustrative, and the other components may also receive the network policy 550 and manage data.

For example, components that receive the network policy 550 may generate data frames based on the information included in the network policy 550 and identify a priority, a destination, a transmission method, and a transmission path (e.g., routing) of the generated data frame.

For example, the master device 510 may be one of the plurality of main control units, the plurality of auxiliary control units, and the plurality of end devices that are included in the data management device.

For example, the master device 510 may be a separate device that is physically and logically distinguished from the plurality of main control units, the plurality of auxiliary control units, and the plurality of end devices that are included in the data management device.

For example, the first auxiliary control unit 531 and/or the second auxiliary control unit 532 may adjust a weight for each of the plurality of functions that may be performed based on the network policy (and/or the control command) received from the master device 510. For example, the first auxiliary control unit 531 and/or the second auxiliary control unit 532 may adjust an operation weight for each of a plurality of functions including at least one of end device control, network communication, protection, monitoring, or any combination thereof based on the network policy (and/or the control command).

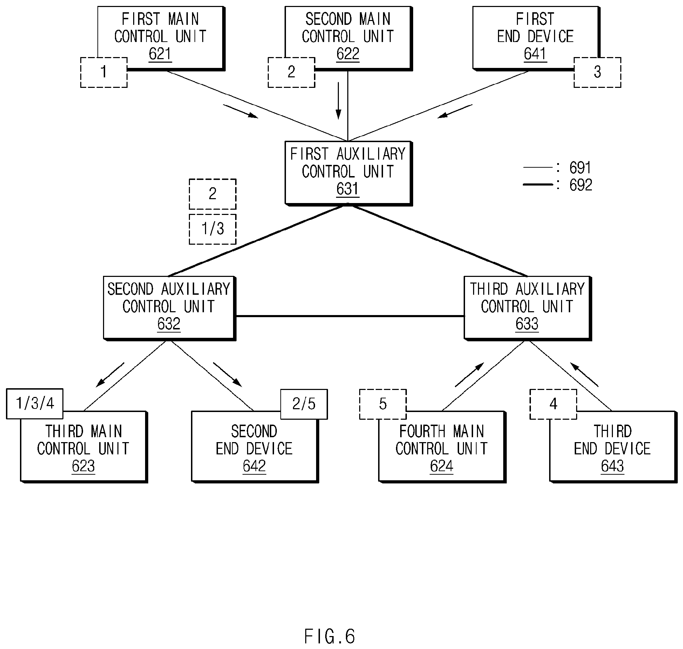

FIG. 6 is a conceptual diagram illustrating the configuration of the data management device according to one embodiment disclosed herein.

According to one embodiment, the data management device (e.g., the data management device 300 of FIG. 3) may include a plurality of main control units 621, 622, 623, and 624, a plurality of auxiliary control units 631, 632, and 633, and a plurality of end devices 641, 642, and 643.

For example, the first auxiliary control unit 631 (or the first zone controller), the second auxiliary control unit 632 (or the second zone controller), and the third auxiliary control unit 633 (or the third zone controller) may be implemented as one auxiliary control unit (e.g., the auxiliary control unit 330 of FIG. 3). The following description may be given assuming that three auxiliary control units illustrated in FIG. 6 are implemented as a single chip.

For example, the auxiliary control unit (or the first auxiliary control unit 631) may receive data No. 1 from the first main control unit 621.

For example, the auxiliary control unit (or the first auxiliary control unit 631) may receive data No. 2 from the second main control unit 622.

For example, the auxiliary control unit (or the first auxiliary control unit 631) may receive data No. 3 from the first end device 641.

For example, the auxiliary control unit (or the third auxiliary control unit 633) may receive data No. 4 from the third end device 643.

For example, the auxiliary control unit (or the third auxiliary control unit 633) may receive data No. 5 from the fourth main control unit 644.

For example, the auxiliary control unit may receive data No. 1 to data No. 5 based on a first communication protocol 591. For example, the first communication protocol 591 may be used based on the first communication speed (e.g., 1 Gbps).

According to one embodiment, the auxiliary control unit may group the received data 1 to 5 based on a specified criterion to generate at least one frame.

For example, the auxiliary control unit may collect data received for the first time and group the data based on at least one of the type of data, a destination, a domain, or any combination thereof.

For example, the auxiliary control unit may group data No. 1 and data No. 3 to generate one frame and group data No. 2 to generate one frame.

For example, the auxiliary control unit may identify a target device corresponding to at least one grouped frame based on the specified criterion. According to FIG. 6, the auxiliary control unit may identify that the target device corresponding to data No. 1, data No. 3, and data No. 4 is the third main control unit 623 and the target device corresponding to data No. 2 and No. data 5 is the second end device 642. The auxiliary control unit may generate a target jumbo frame including data No. 1, data No. 3, and data No. 4 to be transmitted to the third main control unit 623 using the second auxiliary control unit 632.

For example, the auxiliary control unit may group the data based on at least one of the type of data, a destination, a domain, or any combination thereof.

According to one embodiment, the auxiliary control unit may identify the zone controller to which the data is transmitted based on the characteristics of the received data and transmit the data to the identified zone controller.

For example, the auxiliary control unit may identify the second auxiliary control unit 632 corresponding to data No. 1, data No. 2, and data No. 3 based on the characteristics of each of data No. 1, data No. 2, and data No. 3 received through the first auxiliary control unit 631. Thereafter, the auxiliary control unit may transmit data No. 1, data No. 2, and data No. 3 transmitted to the first auxiliary control unit 631 to the second auxiliary control unit 632.

For example, the auxiliary control unit may identify the second auxiliary control unit 632 corresponding to data No. 4 and data No. 5 based on the characteristics of each of data No. 4 and data No. 5 received through the third auxiliary control unit 633. Thereafter, the auxiliary control unit may transmit data No. 4 and data No. 5 transmitted to the third auxiliary control unit 633 to the second auxiliary control unit 632.

For example, the first auxiliary control unit 631 and the third auxiliary control unit 633 may transmit data to the second auxiliary control unit 632 based on a second communication protocol 592. For example, the second communication protocol 592 may be used based on the second communication speed (e.g., 10 Gbps) higher than the first communication speed.

For example, the auxiliary control unit (or the second auxiliary control unit 632) may collect data No. 4 in the frame, which groups data No. 1 and data No. 3, and generate a first target jumbo frame to be transmitted to the third main control unit 623, which is a target device.

For example, the auxiliary control unit (or the second auxiliary control unit 632) may collect data No. 2 and data No. 5 and generate a second target jumbo frame to be transmitted to the second end device 642, which is a target device.

For example, the first target jumbo frame may include data collected for the first time corresponding to the control cycle of the third main control unit 623.

For example, the second target jumbo frame may include data collected for a second time corresponding to the control cycle of the second end device 642.

For example, the auxiliary control unit (or the second auxiliary control unit 632) may transmit the first target jumbo frame generated by receiving, collecting, and grouping data for the first time to the third main control unit 623. That is, the auxiliary control unit may collect data corresponding to the third main control unit 623 for the first time, and when the first time elapses, the auxiliary control unit may transmit the first target jumbo frame corresponding to the result of the collection to the third main control unit 623.

For example, the auxiliary control unit (or the second auxiliary control unit 632) may transmit the second target jumbo frame generated by receiving, collecting, and grouping data for the second time to the second end device 642. That is, the auxiliary control unit may collect data corresponding to the second end device 642 for the second time, and when the second time elapses, the auxiliary control unit may transmit the second target jumbo frame corresponding to the result of the collection to the second end device 642.

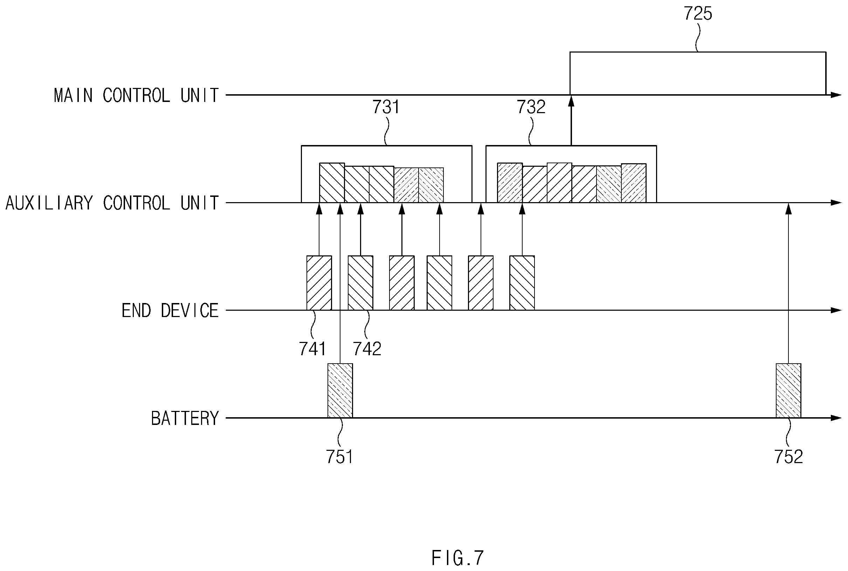

FIG. 7 is a conceptual diagram illustrating a method of transmitting data by the data management device according to one embodiment disclosed herein.

In one embodiment, the data management device (e.g., the data management device 300 of FIG. 3) may include a battery, an end device (e.g., the end device 340 of FIG. 3), an auxiliary control unit (e.g., the auxiliary control unit 330 of FIG. 3), and a main control unit (e.g., the main control unit 320 of FIG. 3). The main control unit may include a plurality of HPCs, and the auxiliary control unit may include a plurality of zone controllers.

According to one embodiment, a battery may be included in the end device and implemented as a single module (e.g., a BMS).

For example, the battery may transmit battery data periodically and/or upon request from the auxiliary control unit and the main control unit. For example, the battery data may include information about a state of charge of a battery, charging/discharging data, a voltage, a pressure, a temperature, operation history, or any combination thereof.

For example, the battery may transmit first battery data 751 and second battery data 752 to the auxiliary control unit (e.g., the auxiliary control unit 330 of FIG. 3).

For example, the end device may transmit a plurality of first end data 741 and a plurality of second end data 742 to the auxiliary control unit.

For example, the auxiliary control unit may group the end data based on the characteristics of the received end data and/or a specified criterion (e.g., the type of data, a destination, a source, a domain, or the like) to generate at least one frame. For example, the at least one frame may be a jumbo frame in which the amount of data exceeds a specified value. For example, the auxiliary control unit may receive data from other end devices (e.g., end devices for controlling sensors and/or multimedia devices) not illustrated in FIG. 7.

For example, the auxiliary control unit may generate a first frame 731 and a second frame 732. For example, a destination of the first frame 731 may be a main control unit other than the main control unit illustrated in FIG. 7.

For example, the auxiliary control unit may transmit the second frame 732 to the main control unit. For example, the auxiliary control unit may collect data received from the end device, the battery, and/or the main control unit for the first time and transmit the second frame 732 generated by grouping the collected data based on a specified criterion to the main control unit. For example, the auxiliary control unit may transmit the generated second frame 732 to the main control unit when the first time (e.g., the control cycle of the main control unit) elapses from the time point at which the auxiliary control unit starts generating the second frame 732 (or when the first time reaches the control cycle of the main control unit).

For example, when a control cycle of another main control unit corresponding to the first frame 731 elapses from the time point at which the auxiliary control unit starts generating the first frame 731, the auxiliary control unit transmits the first frame 731 generated during the control cycle of another main control unit to another main control unit.

For example, the main control unit may divide the second frame 732 on the basis of a service and process the services. For example, the main control unit may divide the data included in the second frame 732 into the first service related to the battery pack, the second service related to the sensor, the third service related to the multimedia, and the like and process the services.

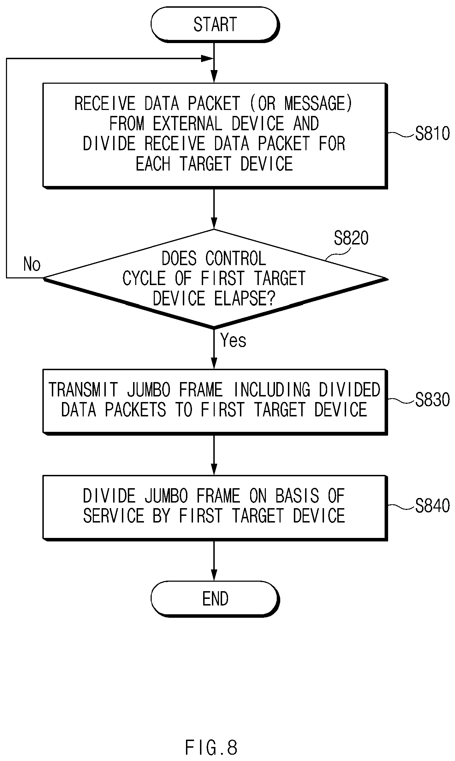

FIG. 8 is a flowchart of the data management method according to one embodiment disclosed herein.

According to one embodiment, the data management device (e.g., the data management device 300 of FIG. 3) may perform operations illustrated in FIG. 8. For example, at least some of the components (e.g., the master device 310, the main control unit 320, the auxiliary control unit 330, and/or the end device 340 of FIG. 3) included in the data management device may be set to perform the operations of FIG. 8.

In the following embodiments, operations of S810 to S840 may be performed sequentially, but are not necessarily performed sequentially. For example, the order of each operation may be changed, and at least two operations may be performed in parallel. In addition, contents corresponding to or overlapping the contents described above with reference to FIG. 8 may be briefly described or omitted.

Referring to FIG. 8, the data management method may include receiving, by a zone controller, a data packet (or a message) from an external device and dividing the received data packet for each device (S810), determining whether a control cycle of a first target device has elapsed (S820), transmitting a jumbo frame including the divided data packet to the first target device (S830), and dividing, by the first target device, the jumbo frame on the basis of a service (S840).

In operation S810, the zone controller may receive the data packet from at least some of other zone controllers, HPCs, and end devices, divide the data packet based on a destination, and group the divided data packets. The zone controller may identify each destination of the jumbo frame generated as the result of the grouping.

In operation S820, the zone controller may identify the control cycle of the first target device (e.g., the HPC) among a plurality of destinations. When the zone controller identifies that the first time, which is the control cycle of the first target device, has elapsed from a time point at which the zone controller starts grouping the data packets, the zone controller may perform operation S830.

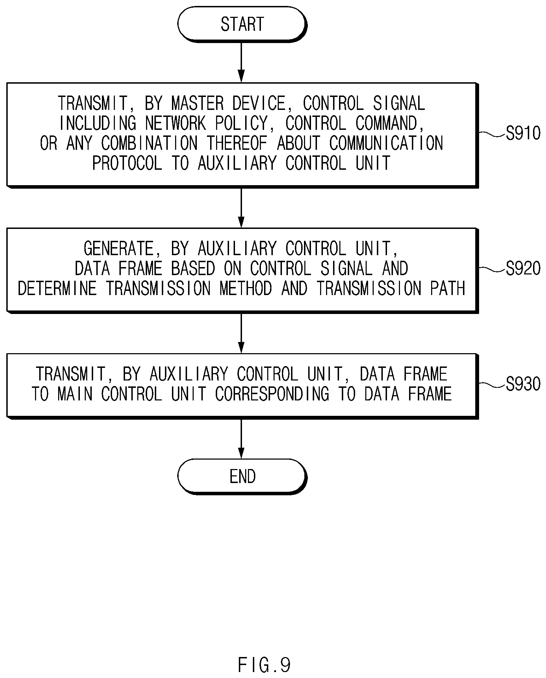

FIG. 9 is a flowchart of the data management method according to one embodiment disclosed herein.

According to one embodiment, the data management device (e.g., the data management device 300 of FIG. 3) may perform operations illustrated in FIG. 9. For example, at least some of the components (e.g., the master device 310, the main control unit 320, the auxiliary control unit 330, and/or the end device 340 of FIG. 3) included in the data management device may be set to perform the operations of FIG. 9.

In the following embodiments, operations of S910 to S930 may be performed sequentially, but are not necessarily performed sequentially. For example, the order of each operation may be changed, and at least two operations may be performed in parallel. In addition, contents corresponding to or overlapping the contents described above with reference to FIG. 9 may be briefly described or omitted.

Referring to FIG. 9, the data management method may include transmitting, by a master device, a control signal including at least one of a network policy, a control command, or any combination thereof about a communication protocol to an auxiliary control unit (S910), generating, by the auxiliary control unit, a data frame based on the control signal and determining a transmission method and a transmission path (S920), and transmitting, by the auxiliary control unit, the data frame to a main control unit corresponding to the data frame (S930).

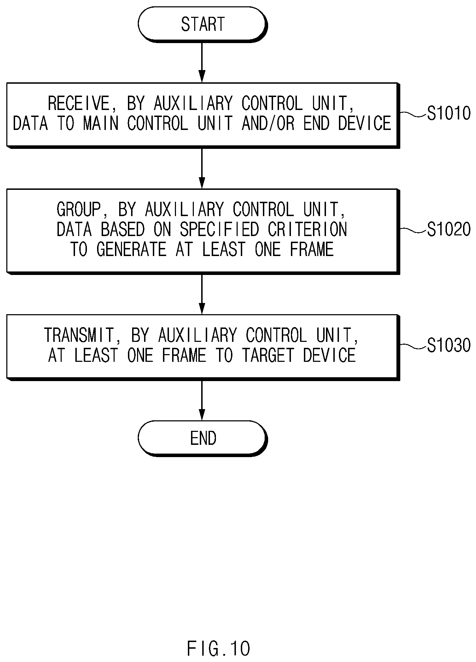

FIG. 10 is a flowchart of the data management method according to one embodiment disclosed herein.

According to one embodiment, the data management device (e.g., the data management device 300 of FIG. 3) may perform operations illustrated in FIG. 10. For example, at least some of the components (e.g., the master device 310, the main control unit 320, the auxiliary control unit 330, and/or the end device 340 of FIG. 3) included in the data management device may be set to perform the operations of FIG. 10.

In the following embodiments, operations of S1010 to S1030 may be performed sequentially, but are not necessarily performed sequentially. For example, the order of each operation may be changed, and at least two operations may be performed in parallel. In addition, contents corresponding to or overlapping the contents described above with reference to FIG. 10 may be briefly described or omitted.

Referring to FIG. 10, the data management method may include receiving, by an auxiliary control unit, data from a main control unit and/or an end device (S1010), grouping, by the auxiliary control unit, the data based on a specified criterion to generate at least one frame (S 1020), and transmitting, by the auxiliary control unit, at least one frame to a target device (S1030).

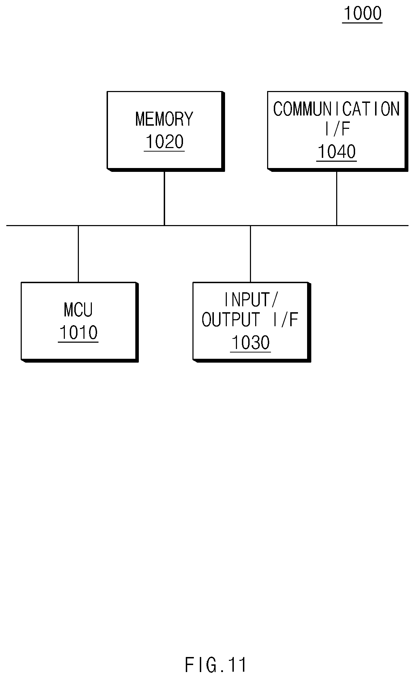

FIG. 11 is a block diagram illustrating a hardware configuration of a computing system for performing an operation method of the data management device according to one embodiment disclosed herein.

Referring to FIG. 11, a computing system 3000 according to one embodiment disclosed herein may include a micro controller unit (MCU) 1010, a memory 1020, an input/output I/F 1030, and a communication I/F 1040.

The MCU 1010 may be a processor configured to execute various programs stored in the memory 1020, process various pieces of information including battery data through these programs, and perform functions of the processor (or the control unit) included in the above-described data management device illustrated in FIG. 3.

The memory 1020 may store various programs for performing the functions of the data management device. In addition, the memory 1020 may store various pieces of information including battery data (voltage data, capacity data, and the like), differential capacity data, and the like and include a constructed database.

The memory 1020 may be provided as a plurality of memories as needed. The memory 1020 may be a volatile memory or a non-volatile memory. As the memory 1020 of the volatile memory, a RAM, a DRAM, a SRAM, etc. can be used. As the memory 1020 of the non-volatile memory, a ROM, a PROM, an EAROM, an EPROM, an EEPROM, a flash memory, etc. can be used. Examples of the above-listed memories 1020 are merely illustrative and are not limited to these examples.

The input/output I/F 1030 may be an interface for connecting an input device (not shown), such as a keyboard, a mouse, or a touch panel, and an output device, such as a display (not shown) with the MCU 1010 and allowing the input and output devices and the MCU 1010 to transmit and receive data.

The communication I/F 1040 is a component capable of transmitting and receiving various data to and from the server and may be various devices capable of supporting wired or wireless communication. For example, the data management device may transmit and receive various pieces of information including battery data and the like from a separately provided external server or the like through the communication I/F 1040.

In this way, the computer program according to one embodiment disclosed herein may be implemented as a module for performing the functions illustrated in FIG. 1, for example, by being recorded in the memory 1020 and processed by the MCU 1010.

Although all the components constituting the embodiments disclosed herein have been described above as being operated by being coupled to one or being coupled, the embodiments disclosed herein are not necessarily limited to these embodiments. That is, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the embodiments without departing from the essential characteristics of the embodiments disclosed herein. Accordingly, the embodiments disclosed herein are not intended to limit the technical spirit disclosed herein but are intended to describe the same, and the scope of the technical spirit disclosed herein is not limited by these embodiments. The scope of the technical spirit disclosed herein should be construed by the appended claims, and all technical spirits within the equivalent range should be construed as being included in the scope of this document.

## Claims

1. A data management device comprising:
a master device;
a main control unit; and
an auxiliary control unit,
wherein the master device is configured to:
transmit a control signal including a network policy, a control command, or any combination thereof about a communication protocol to the auxiliary control unit, and
the auxiliary control unit is configured to:
generate a data frame based on the control signal, determine a transmission method and a transmission path, and then transmit the data frame to the main control unit corresponding to the data frame.

2. The data management device of claim 1, wherein the control signal includes information about at least one of a type of data frame, a priority according to the type, a destination, a source, the transmission method, the transmission path, or any combination thereof.

3. The data management device of claim 1, wherein the master device is a first control device included in the main control unit or the auxiliary control unit, or corresponds to a separate second control device distinguished from the main control unit and the auxiliary control unit.

4. The data management device of claim 1, wherein the auxiliary control unit is configured to:
identify a specified high performance computer (HPC) corresponding to the data frame among a plurality of HPCs included in the main control unit based on the control signal;
collect the data frame for a control cycle of the specified HPC; and
transmit the collected data frame to the specified HPC based on the control cycle.

5. The data management device of claim 1, wherein the master device is configured to update at least one of the network policy, the control command, or any combination thereof based on at least one of a network state between the main control unit and the auxiliary control, an administrator command received from the outside, or any combination thereof.

6. The data management device of claim 1, further comprising an end device,
wherein the master device is configured to transmit the control signal to the end device, and
the end device is configured to generate a battery pack data frame for controlling a battery pack based on the control signal and control the battery pack based on the battery pack data frame.

7. The data management device of claim 6, wherein the end device is configured to:
identify a specified zone controller corresponding to the battery pack data frame among a plurality of zone controllers included in the auxiliary control unit based on the control signal;
collect the battery pack data frame for a control cycle of the specified zone controller; and
transmit the collected battery pack data frame to the specified zone controller based on the control cycle.

8. The data management device of claim 1, wherein the auxiliary control unit is configured to adjust an operation weight of each of a plurality of functions including at least one of end device control, network communication, protection, monitoring, or any combination thereof based on the control signal.

9. The data management device of claim 1, wherein the master device is configured to determine at least one of the network policy, the control command, or any combination thereof based on an operation state of a host vehicle.

10. A vehicle comprising the data management devices of any one of claims 1 to 9.

11. A data management method comprising:
transmitting, by a master device, a control signal including a network policy, a control command, or any combination thereof about a communication protocol to an auxiliary control unit; and
generating, by the auxiliary control unit, a data frame based on the control signal, determining a transmission method and a transmission path, and then transmitting the data frame to the main control unit corresponding to the data frame.

12. The data management method of claim 11, wherein the master device is a first control device included in the main control unit or the auxiliary control unit, or corresponds to a separate second control device distinguished from the main control unit and the auxiliary control unit.

13. The data management method of claim 11, further comprising:
identifying, by the auxiliary control unit, a specified high performance computer (HPC) corresponding to the data frame among a plurality of HPCs included in the main control unit based on the control signal;
collecting, by the auxiliary control unit, the data frame for a control cycle of the specified HPC; and
transmitting, by the auxiliary control unit, the collected data frame to the specified HPC based on the control cycle.

14. The data management method of claim 11, further comprising updating, by the master device, at least one of the network policy, the control command, or any combination thereof based on at least one of a network state between the main control unit and the auxiliary control, an administrator command received from the outside, or any combination thereof.

15. The data management method of claim 11, further comprising:
transmitting, by the master device, the control signal to an end device; and
generating, by the end device, a battery pack data frame for controlling a battery pack based on the control signal and controlling the battery pack based on the battery pack data frame.

16. The data management method of claim 15, further comprising:
identifying, by the end device, a specified zone controller corresponding to the battery pack data frame among a plurality of zone controllers included in the auxiliary control unit based on the control signal;
collecting, by the end device, the battery pack data frame for a control cycle of the specified zone controller; and
transmitting, by the end device, the collected battery pack data frame to the specified zone controller based on the control cycle.

17. The data management method of claim 11, further comprising adjusting, by the auxiliary control unit, an operation weight of each of a plurality of functions including at least one of end device control, network communication, protection, monitoring, or any combination thereof based on the control signal.

18. The data management method of claim 11, further comprising determining, by the master device, at least one of the network policy, the control command, or any combination thereof based on an operation state of a host vehicle.
